# EUROPÄISCHE PATENTSCHRIFT

(11) **EP 3 881 733 B1**
(45) Veröffentlichungstag und Bekanntmachung des Hinweises auf die Patenterteilung: **15.11.2023**
(21) Anmeldenummer: 21160610.8
(22) Anmeldetag: 04.03.2021
(51) Int. Cl.: A47J 31/60, A47J 31/54

(54) **VORRICHTUNG ZUR AUSGABE EINES FLÜSSIGEN LEBENSMITTELS UND VERFAHREN ZUM BETRIEB DERSELBEN**
LIQUID FOOD DISPENSING APPARATUS AND METHOD OF OPERATING THE SAME
DISPOSITIF DE DISTRIBUTION D'UNE DENRÉE ALIMENTAIRE LIQUIDE ET SON PROCÉDÉ DE FONCTIONNEMENT

(30) Priorität: 19.03.2020 DE 102020107545
(43) Veröffentlichungstag der Anmeldung: 22.09.2021
(73) Patentinhaber: FRANKE Kaffeemaschinen AG, 4663 Aarburg (CH)
(72) Erfinder: WAECHTER, Serge, 4052 Basel (CH); MUELLER, Simon, 5037 Muhen (CH)
(74) Vertreter: LBP Lemcke, Brommer & Partner Patentanwälte mbB

(56) Entgegenhaltungen:
- EP-A1- 3 349 627
- WO-A1-2011/105942
- DE-A1-102017 114 253
- DE-T5-112018 000 582

## Beschreibung

Die vorliegende Erfindung betrifft eine Vorrichtung zur Ausgabe eines flüssigen Lebensmittels, insbesondere Milch, mit einer Heizeinrichtung zur Erwärmung des flüssigen Lebensmittels, welche einen Fluidweg für das flüssige Lebensmittel und eine elektrische Heizung aufweist, wobei Fluidweg und Heizung mit einem Wärmespeicher aus einem Material hoher thermischer Masse und Leitfähigkeit in thermischem Kontakt stehen und der Wärmespeicher durch die Heizung auf eine Betriebstemperatur gebracht wird, die unterhalb von 80°C, vorzugsweise unterhalb von 70°C liegt, und bei dem der Fluidweg über mindestens ein Wegeventil mit einer Spülleitung verbindbar ist, über die zu Reinigungszwecken Wasser und/oder Reinigungsmittel durch den Fluidweg geleitet werden kann.

Bei der Zubereitung von Heißgetränken wie etwa Kaffee werden häufig flüssige Lebensmittel wie Milch, Milchschaum oder Milchersatzprodukte zugegeben. Da solche flüssigen Lebensmittel gekühlt gelagert werden, müssen diese vor Zugabe zu einem Heißgetränk erwärmt werden. Dies kann mithilfe eines Durchlauferhitzers mit thermischer Masse, eines sogenannten Thermoblocks, erfolgen.

Bei einem Thermoblock handelt es sich um eine Heizeinrichtung, die einen Fluidweg für das flüssige Lebensmittel und eine elektrische Heizung aufweist, wobei Fluidweg und Heizung mit einem Wärmespeicher aus einem Metall hoher thermische Masse und/oder Leitfähigkeit wie etwa Aluminium, Messing oder Kupfer in thermischem Kontakt stehen. Eine derartige Vorrichtung zur Ausgabe eines flüssigen Lebensmittels kann in einen Kaffeevollautomaten integriert oder als Beistellgerät ausgebildet sein.

WO 2011/105942 A beschreibt ein System zur Herstellung von aufgeschäumter Milch für Heißgetränke wie Kaffee oder Schokolade, wobei das Reinigen von Milchleitungen mit Heißwasser erreicht wird.

Die Schrift DE 10 2017 114253 A1 beschreibt einen Durchlauferhitzer, der zur Dampferzeugung für einen Dampfgarer oder eine Kaffeemaschine eingesetzt werden kann. Durch die Verdampfung von Wasser zur Dampferzeugung wird vor allem am Eingang des Durchlauferhitzers Kalk gebildet. Um diesen zu entfernen sieht DE 10 2017 114253 A1 vor, dass die Flussrichtung umgekehrt wird, sodass an der kalkbehafteten Seite Wasserdampf und Tröpfchen mit hoher Geschwindigkeit vorbeigeleitet, und durch die dabei auftretenden Scherkräfte Kalkablagerungen mechanisch abgetragen werden.

Bei der Erwärmung von Milch oder anderen eiweißhaltigen flüssigen Lebensmitteln kann es zu Ablagerungen an den Innenwänden des Fluidwegs kommen, dem sogenannten Fouling. Hierbei führen insbesondere höhere Temperaturen zu verstärkter Bildung von Ablagerungen. Daher werden Durchlauferhitzer für Milch üblicherweise bei Temperaturen unterhalb von 70°C betrieben, um eine verstärkte Bildung von Ablagerungen zu vermeiden. Außerdem müssen die Fluidwege regelmäßig mit Wasser und speziellem Milchreiniger gespült werden.

Trotz einer Temperaturregelung auf eine Betriebstemperatur von unter 70°C lassen sich Ablagerungen nicht vollständig vermeiden und auch bei regelmäßiger Reinigung werden diese nur unvollständig entfernt.

Es ist daher eine Aufgabe der vorliegenden Erfindung, eine Vorrichtung zur Ausgabe eines flüssigen Lebensmittels sowie ein Verfahren zu dessen Betrieb anzugeben, bei denen Ablagerungen im Bereich der Heizeinrichtung besser entfernt werden können.

Die Aufgabe wird hinsichtlich der Vorrichtung gelöst durch die Merkmale des Anspruchs 1 und hinsichtlich des Verfahrens durch die Merkmale des Anspruchs 8.

Vorteilhafte Ausgestaltungen sind den abhängigen Ansprüchen zu entnehmen.

Bei einer Vorrichtung der eingangs genannten Art ist erfindungsgemäß eine Steuerungseinrichtung vorgesehen, die ausgebildet ist, den Wärmespeicher der Heizeinrichtung zur Durchführung einer thermischen Regeneration auf eine Hochtemperatur von über 100°C zu erwärmen und das Wegeventil ein- oder mehrmals zur Durchleitung von Wasser oder Reinigungsmittellösung durch den Fluidweg der auf Hochtemperatur erwärmten Heizeinrichtung zu öffnen.

Der Erfindung liegt die Erkenntnis zugrunde, dass bei der auf über 100°C erhitzten Heizeinrichtung bereits bei ein- oder mehrmaliger Spülung mit Kaltwasser ohne Reinigungsmittel eine sehr hohe Reinigungswirkung für die im Fluidweg der Heizeinrichtung anhaftenden Rückstände erzielt werden kann. In dem auf über 100°C erhitzten Fluidweg kommt es zu einem lokalen Verdampfen und wieder zu einer Kondensation des durchfließenden Kaltwassers. Diese Kavitation führt zu starken Wandschubspannungen und Druckschwankungen. Zudem wird die Struktur der Ablagerungen durch das Verdampfen der darin enthaltenen Feuchtigkeit aufgebrochen, sodass diese einfacher gelöst werden können. Ein vorteilhafter Temperaturbereich liegt hierbei vorzugsweise bei über 110°C, weiter bevorzugt bei über 120°C.

Bevorzugt ist die Steuerung hierbei ausgebildet, den Fluidweg bereits vor Erwärmung der Heizeinrichtung auf Hochtemperatur über das Wegeventil mit Wasser oder Reinigungsmittellösung zu befüllen. Hierdurch wird sichergestellt, dass in dem Fluidweg nicht noch flüssiges Lebensmittel vorhanden ist, das bei einer Erhitzung zur Bildung weiterer Rückstände führen würde.

Die Steuerung kann insbesondere ausgebildet sein, das Wegeventil zur stoßweisen Durchleitung von Wasser durch den Fluidweg der auf Hochtemperatur erwärmten Heizeinrichtung mehrmals kurzzeitig zu öffnen. Durch ein stoßweises Spülen mit Wasser wird eine besonders gute Reinigungswirkung erzielt.

Bei einer bevorzugten Ausführungsform besitzt die Vorrichtung eine Pumpe zum Fördern des flüssigen Lebensmittels über eine Lebensmittelzuleitung aus einem Vorratsbehälter, wobei die Heizeinrichtung zur Erwärmung des von der Pumpe geförderten Lebensmittels druckseitig der Pumpe angeordnet ist. Zusätzlich kann vorgesehen sein, dass die Spülleitung saugseitig der Pumpe in die Lebensmittelzuleitung einmündet. Somit kann die Pumpe gleichermaßen zur Förderung des flüssigen Lebensmittels im Betrieb der Vorrichtung und zur Reinigung der Heizeinrichtung verwendet werden, indem im letzteren Fall mittels der Pumpe Wasser oder Reinigungsmittellösung über die Spülleitung angesaugt und durch die Heizeinrichtung gefördert wird. Gleichzeitig werden hierbei auch die Pumpe selbst gespült und Lebensmittelrückstände entfernt.

Bei einer bevorzugten Weiterbildung ist zusätzlich ein saugseitig der Pumpe in die Lebensmittelzuleitung einmündender Lufteinlass vorgesehen. Über diesen kann zusätzlich zu dem flüssigen Lebensmittel Luft angesaugt werden, mit der das flüssige Lebensmittel in der Pumpe aufgeschäumt und als geschäumtes Lebensmittel ausgegeben wird. Im Rahmen der Erfindung ist hierbei insbesondere vorgesehen, dass die Spülleitung in eine vom Lufteinlass zur Lebensmittelleitung führende Luftansaugleitung einmündet. Der Lufteinlass kann des Weiteren über ein Luftventil verschlossen werden. Das Luftventil kann einerseits zur Dosierung der angesaugten Luftmenge dienen. Andererseits kann im Falle einer Reinigung der Lufteinlass verschlossen und über die in die Luftansaugleitung einmündende Spülleitung Wasser oder Reinigungsmittellösung in Richtung der Pumpe geleitet werden.

Als besonders vorteilhaft hat es sich herausgestellt, im Rahmen der thermischen Regeneration bei auf die Hochtemperatur erwärmtem Wärmespeicher kaltes Frischwasser durch den Fluidweg zu leiten. Hierzu wird ein erstes Wegeventil zu einer Frischwasser-Spülleitung geöffnet. Die thermische Regeneration kann mit einem Reinigungsdurchlauf mit einer Reinigungsmittellösung kombiniert werden, indem vorher oder anschließend bei ausgeschaltetem oder auf Betriebstemperatur erwärmter Heizeinrichtung die Reinigungsmittellösung durch den Fluidweg der Heizeinrichtung geleitet wird. Herzu kann über eine Pumpe Reinigungsmittellösung aus einem Reinigungsmittelmischbehälter angesaugt und durch den Fluidweg geleitet werden. Anschließend wird nochmals mit heißem und/oder kaltem Wasser nachgespült.

Im Rahmen des erfindungsgemäßen Verfahrens zum Betrieb einer Heizeinrichtung ist erfindungsgemäß vorgesehen, dass der Wärmespeicher zur Durchführung einer thermischen Regeneration auf eine Hochtemperatur von über 100°C erwärmt und das Wegeventil ein- oder mehrmals geöffnet wird, um Wasser oder Reinigungsmittellösung durch den Fluidweg der auf Hochtemperatur erwärmten Heizeinrichtung zu leiten.

Weitere Vorteile und Ausgestaltungen der Erfindung ergeben sich aus der nachfolgenden Beschreibung eines Ausführungsbeispiels anhand der einzigen Figuren. Hierbei zeigt:
- Figur 1: ein Fluidschema einer Vorrichtung zur Ausgabe eines flüssigen Lebensmittels,
- Figur 2: eine isometrische Darstellung des in der Heißgetränkeausgabevorrichtung verwendeten Thermoblocks,
- Figur 3: einen Schnitt durch einen Thermoblock mit zwei getrennten Fluidwegen, und
- Figur 4: eine isometrische Darstellung der wendelförmigen Fluidleitungen sowie der Heizung des Thermoblocks aus Figur 2.

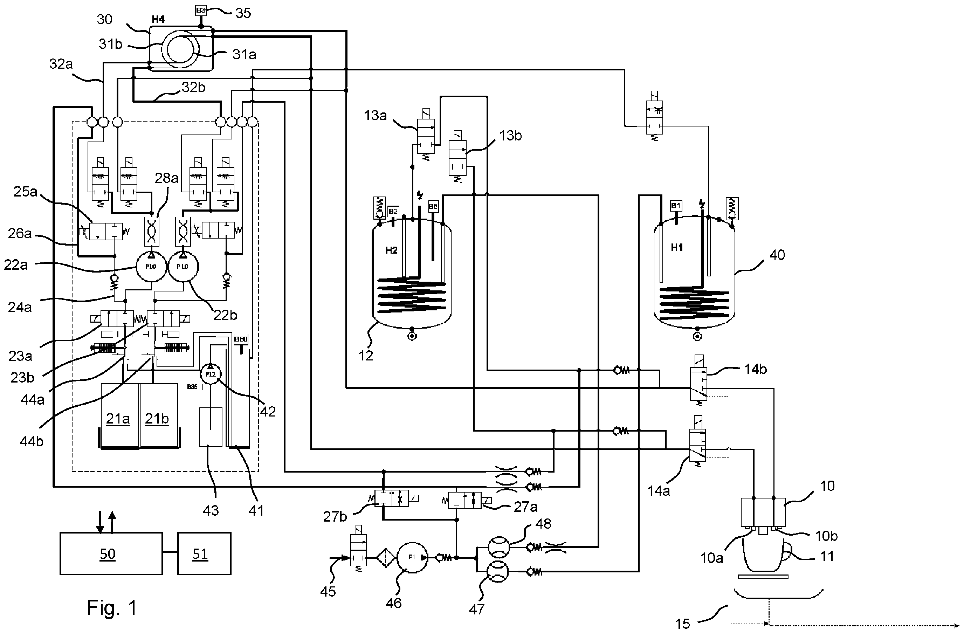

In Figur 1 ist ein sogenanntes Wasserlaufschema der hydraulischen Komponenten einer Heißgetränkeausgabevorrichtung dargestellt. Bei der Heißgetränkeausgabevorrichtung kann es sich insbesondere um einen Kaffeevollautomaten handeln. Die Vorrichtung umfasst einen Auslaufkopf 10, unter den ein Trinkgefäß 11 platziert wird. Über den Auslaufkopf 10 können unterschiedliche Heißgetränke bzw. Getränkezutaten in das Trinkgefäß 11 ausgegeben werden. Hierzu umfasst die Vorrichtung einen Heißwasserbereiter 12 in Form eines Boilers. Über die Ventile 13a, 13b kann Heißwasser zu den Auslässen 10a, 10b des Auslasskopf 10 ausgegeben werden. Über die Umschaltventile 14a, 14b kann das Heißwasser zum Spülen der Fluidwege auch über die Drainageleitung 15 direkt in einen Ablauf geleitet werden.

Mit dem Heißwasser aus dem Heißwasserboiler 12 kann zum Beispiel heißer Tee oder frischgebrühter Kaffee zubereitet werden. Eine entsprechende Brühvorrichtung an sich bekannter, herkömmlicher Bauart ist der Übersichtlichkeit halber hier nicht dargestellt.

Wesentlich im Rahmen der vorliegenden Erfindung ist die Ausgabe von in Vorratsbehältern vorgehaltenen flüssigen Lebensmitteln, insbesondere Milch. Hierzu ist ein Kühlschrank 20 vorgesehen, in welchem zwei Vorratsbehälter 21a, 21b gekühlt gelagert sind. Somit können zwei unterschiedliche flüssige Lebensmittel wie etwa normale Vollmilch und laktosefreie Milch oder fettarme Milch oder auch Milchersatzprodukte wie Mandelmilch, Reismilch, Sojamilch oder Hafermilch vorgehalten werden. Ebenso ist es möglich, andere Fertiggetränke wie etwa Tee in einem der Vorratsbehälter 21a, 21b vorzuhalten und wahlweise als Heißgetränk oder Heißgetränkezusatz auszugeben.

Jeder der beiden Vorratsbehälter 21a, 21b ist jeweils über eine Ansaugleitung mit einer Pumpe 22a, 22b verbunden, über die das betreffende flüssige Lebensmittel aus dem Vorratsbehälter 21a, 21b zu dem Auslasskopf 10 gefördert werden kann. Die Fluidwege für die in den beiden Vorratsbehältern 21a, 21b vorgehaltenen flüssigen Lebensmittel verlaufen bis zum Auslasskopf 10 komplett getrennt. Da die Hydraulikschaltung für die flüssigen Lebensmittel aus den beiden Vorratsbehältern 21a, 21b symmetrisch aufgebaut ist, wird im Nachfolgenden nur der Fluidweg für das Lebensmittel aus dem Vorratsbehälter 21a erläutert. Dieselben Erläuterungen gelten sinngemäß auch für den zweiten Fluidweg des Lebensmittels aus dem zweiten Vorratsbehälter 21b.

In der Ansaugleitung zwischen Vorratsbehälter 21a und Pumpe 22a befindet sich ein Absperrventil 23a. Außerdem mündet in die Ansaugleitung zwischen dem Absperrventil 23a und der Pumpe 22a eine Luftleitung 24a. Diese ist mit einem Luftventil 25a versehen. Wird das Luftventil 25a geöffnet, so wird bei Betrieb der Pumpe 22a neben dem flüssigen Lebensmittel aus dem Vorratsbehälter 21a Luft mit angesaugt. Auf diese Weise kann das flüssige Lebensmittel aus dem Vorratsbehälter 21a in der Pumpe 22a aufgeschäumt und als geschäumter Getränkezusatz wie etwa Milchschaum ausgegeben werden. Durch einen getakteten Betrieb des Luftventils 25a kann die Luftmenge dosiert werden. Außerdem mündet in die Luftleitung 24a eine Spülleitung 26a. Über diese kann durch Öffnung eines Spülventils 27a Frischwasser durch das Milchsystem geleitet werden, um dieses zu reinigen.

Druckseitig der Pumpe befindet sich ein Wendelmischer 28a, der als Gegendruckelement dient, um den in der Pumpe herrschenden Druck zu erhöhen. Hierdurch wird das Aufschäumen des flüssigen Lebensmittels begünstigt. Alternativ zu dem Wendelmischer kann auch ein beliebiges anderes Gegendruckelement, beispielsweise eine feste Blende oder ein labyrinthartiges Widerstandsdurchlasselement eingesetzt werden.

Hinter dem Gegendruckelement 28a sind in Parallelschaltung zwei Schließventile 29, 29' angeordnet. Durch Öffnen des Ventils 29 kann das von der Pumpe 22a geförderte flüssige Lebensmittel aus dem Vorratsbehälter 21a über eine Lebensmittelleitung 33a zu einer als Thermoblock ausgebildeten Heizeinrichtung 30 und über diese weiter zum Getränkeauslass 10a am Auslasskopf 10 geleitet werden. In dem Thermoblock 30 wird das flüssige Lebensmittel erwärmt, sodass dieses als erwärmte Getränkezutat für die Zubereitung eines Heißgetränks ausgegeben wird. Alternativ kann das Ventil 29 geschlossen und das Ventil 29` geöffnet werden. Hierdurch wird der Thermoblock umgangen und das geförderte flüssige Lebensmittel direkt, also ohne Erwärmung, am Getränkeauslass 10a des Auslasskopfes 10 ausgegeben. Diese Option kann gewählt werden, wenn statt eines Heißgetränks ein gekühltes Getränk wie etwa Eiskaffee oder Eisschokolade gewünscht wird.

Die Vorrichtung verfügt zusätzlich über einen zweiten Heißwasserboiler 40. Über diesen kann heißes Wasser zu Reinigungszwecken in einen Reinigungsmittelmischbehälter 41 eingefüllt werden. Über eine Dosierpumpe 42 kann außerdem aus einem Reinigungsmittelbehälter 43 Reinigungsmittel in den Reinigungsmittelmischbehälter 41 gefördert werden. Auf diese Weise wird eine Reinigungsmittellösung angemischt. Über ein umsteckbares Verbindungselement 44a kann die von der Pumpe 22a kommende Ansaugleitung mit dem Reinigungsmittelmischbehälter 41 verbunden werden. Somit kann Reinigungsflüssigkeit angesaugt und durch das Milchsystem gefördert werden. Das Drainageventil 14a wird in diesem Fall in Richtung der Ablaufleitung 15 geöffnet, sodass die Reinigungsmittellösung nicht versehentlich in ein Trinkgefäß ausgegeben werden kann. Anschließend wird durch Öffnen des Ventils 27a mit Wasser nachgespült. Ein entsprechendes integriertes Reinigungssytem ist in der EP 3 349 627 A1 beschrieben, auf die hier zur Vermeidung unnötiger Wiederholungen vollinhaltlich Bezug genommen wird.

Das Verbindungselement 44a und das parallele Verbindungselement 44b für den zweiten Vorratsbehälter 21b dienen als Steckanschlüsse für die Vorratsbehälter und wahlweise für den Reinigungsmittelmischbehälter 41, der zur Durchführung einer Reinigung anstelle der Vorratsbehälter 21a, 21b angeschlossen werden kann.

Der Thermoblock 30 weist zwei getrennte Fluidwege 31a, 31b auf. Der Fluidweg 31a ist mit der von dem ersten Vorratsbehälter 21a kommenden Lebensmittelleitung 23a verbunden, während der Fluidweg 31b mit der von dem zweiten Vorratsbehälter 21b kommenden Lebensmittelleitung 32b verbunden ist.

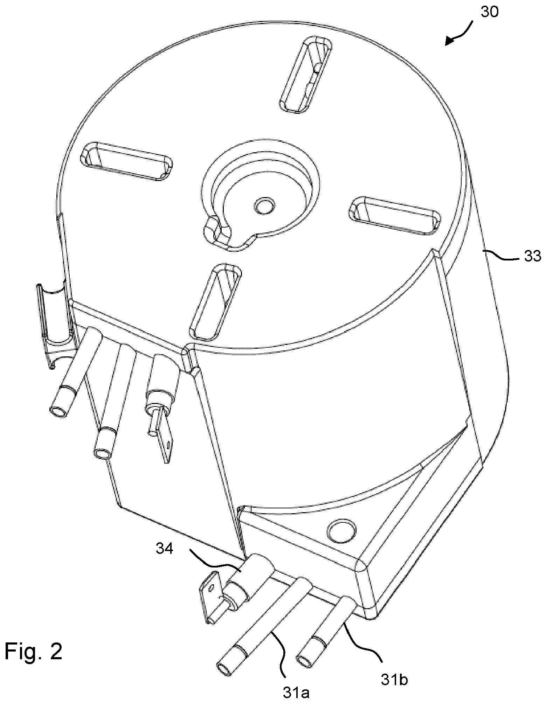

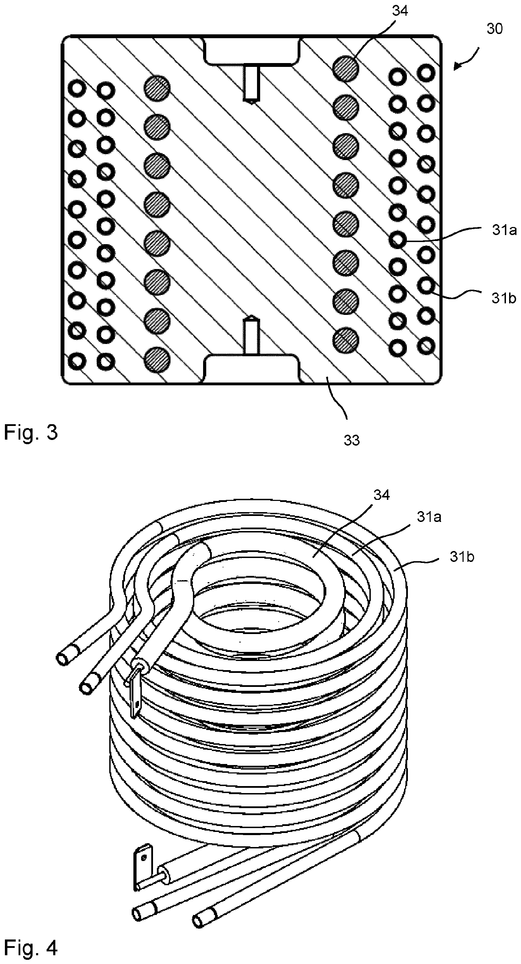

In den Figuren 2 bis 4 ist der Aufbau des Thermoblocks 30 näher dargestellt. Der Grundkörper 33 des Thermoblocks 30 besteht aus einem Aluminiumgusskörper. In diesem sind die als Fluidwege 31a, 31b dienenden Leitungen sowie eine elektrische Heizung 34 mit elektrischen Anschlusskontakten eingebettet. Die Leitung 31a, 31b bestehen aus Edelstahl und verlaufen innerhalb des Thermoblocks 30 wendelförmig. Die elektrische Heizung 34 ist ebenfalls wendelförmig ausgebildet. Die wendelförmige Heizung 34 und die wendelförmigen Leitungen 31a, 31b sind hierbei konzentrisch um die Mittelachse des Thermoblocks 30 angeordnet, wobei die Heizung 34 den innersten Wendel bildet.

Bei einer alternativen Ausführungsform könnte der Thermoblock auch aus einem Grundkörper aus Kupfer bestehen, auf den als Fluidwege Lebensmittelleitungen aufgelötet sind. Die Heizung könnte in diesem Fall im Inneren des Grundkörpers oder auf dessen, den Lebensmittelleitungen gegenüberliegenden Seite angeordnet sein.

Mit der Heizung 34 wird der Thermoblock 30 auf eine konstante Betriebstemperatur zwischen 60°C und 70°C gebracht. Ein Fluid, welches durch die wendelförmigen Leitungen 31a, 31b fließt, wird auf seinem Weg durch den Thermoblock 30 erwärmt. Durch die große thermische Masse des Aluminiumgusskörpers 33 kann über die Heizung 34 eine konstante Betriebstemperatur gehalten werden, wenn durch die Fluidwege 31a und/oder 31b flüssige Lebensmittel geleitet werden. Über einen Temperatursensor 35 am Thermoblock 30 wird dessen Temperatur ständig gemessen und kann über die Heizung 34 nachgeregelt werden.

Die beiden Boiler 12, 40 sind mit einem Wasserzulauf 45 verbunden. In der Zulaufleitung befindet sich eine Wasserpumpe, mit der Frischwasser gefördert wird. In den beiden von der Wasserpumpe 46 zu den Boilern führenden Zuleitungen sind außerdem Durchflussmesser 47, 48 angeordnet, mit denen die Wassermenge gemessen wird. Hiermit kann bezüglich des Heißwasserboilers 12 die Getränkemenge und hinsichtlich des Heißwasserboilers 40 die Konzentration der Reinigungsmittellösung im Reinigungsmittelmischbehälter 41 dosiert werden. Außerdem zweigen von der Wasserzuleitung eine Leitung ab, die über die Spülventile 27a, 27b zu den Luftansaugleitungen der beiden Fluidzweige führt. Wie bereits beschrieben kann über diese Ventile der jeweilige Fluidzweig des Milchsystems gespült werden.

Im Ausführungsbeispiel wurde ein Thermoblock mit zwei getrennten Fluidwegen gezeigt. Grundsätzlich möglich wäre es auch, separate Thermoblöcke für die beiden Lebensmittelarten vorzusehen. Ebenso können in entsprechender Weise auch mehr als zwei Fluidwege vorgesehen werden, wenn mehr als zwei unterschiedliche flüssige Lebensmittel vorgehalten und wahlweise ausgegeben werden sollen. Ebenso wäre es möglich, bei mehr als zwei flüssigen Lebensmittelsorten separate Thermoblöcke vorzusehen.

Zur Reinigung des Thermoblocks 30 wird eine thermische Regeneration durchgeführt, hierzu wird der Thermoblock 30 durch Öffnen der Ventile 27a und 27b mit Kaltwasser befüllt. Die Ventile 23a, 23b sind hierbei geschlossen, sodass die Pumpen 22a, 22b über die Luftleitungen 24a, 24b Wasser aus dem Wasserzulauf 47 ansaugen. Außerdem werden die Drainageventile 14a, 14b auf die Drainageleitung 15 umgeschaltet, sodass erhitztes Wasser aus dem Thermoblock 30 statt zu dem Auslasskopf 10 direkt in den Ablauf gelangt. Anschließend wird der Thermoblock 30 auf eine Temperatur von etwa 125°C aufgeheizt. Das Wasser in den Fluidwegen 31a, 31b beginnt zu kochen. Nun werden mehrmals die Ventile 27a und 27b erneut kurzzeitig geöffnet, um den erhitzten Thermoblock mehrmals mit Wasser zu spülen. Dabei kommt es zu einem lokalen Verdampfen und wieder zu einer Kondensation. Die damit verbundene Kavitation führt zu starken Wandschubspannungen und Druckschwankungen. Bereits das mehrmalige Spülen des auf Hochtemperatur erhitzten Thermoblocks 30 mit Kaltwasser ohne Reinigungsmittel entfaltet auf diese Weise eine sehr große Reinigungswirkung für die im Thermoblock haftenden Milch-Rückstände. Zudem wird die Struktur der Milch-Ablagerung durch das Verdampfen der darin enthaltenen Feuchtigkeit aufgebrochen und kann dadurch einfacher gelöst werden.

Die thermische Regeneration des Thermoblocks 30 kann entweder nach einer "normalen Reinigung durchgeführt oder in die "normale" Reinigung integriert werden.

Zur "normalen" Reinigung wird die Heizung abgeschaltet und es wird ein Reinigungsgang durchgeführt, indem mittels der Pumpen 22a, 22b eine zuvor in dem Reinigungsmittelmischbehälter 41 angemischte, warme Reinigungsmittellösung durch den Thermoblock gefördert wird. Hierzu sind die Pumpen 22a, 22b statt mit den beiden Vorratsbehältern 21a, 21b mit der zum Reinigungsmittelmischbehälter 41 führenden Ansaugleitung verbunden, indem die beiden Verbindungselemente 44a, 44b manuell in die Reinigungsstellung umgesteckt werden. Die Stellung der Verbindungselemente 44a, 44b kann hierbei mittels Reed-Kontakten überwacht werden, sodass ein Reinigungsdurchlauf von der Steuerung nur freigegeben wird, wenn die Verbindungselemente 44a, 44b in die Reinigungsstellung gebracht sind. Die Ventile 23a, 23b werden geöffnet, sodass die Pumpen 22a, 22b die Reinigungsmittellösung ansaugen. Nachdem die Reinigungsmittellösung durch das Milchsystem durchgeleitet wurde, wird nochmals mit Heißwasser nachgespült.

Nach Abschluss des beschriebenen "normalen" Reinigungsgangs und der hierzu erforderlichen manuellen Schritte, kann die thermische Regeneration des Thermoblocks 30 autonom erfolgen.

Alternativ kann nach dem Durchleiten der Reinigungsmittellösung die thermische Regeneration inklusive einer anschließenden Abkühlung des Thermoblocks 30 erfolgen. Danach erfolgt der zweite Teil der "normalen" Reinigung, indem mit Heißwasser nachgespült wird.

Die Ansteuerung der Heißgetränkeausgabevorrichtung erfolgt über eine programmierbare Steuerungseinrichtung 50. Diese ist verbunden mit einer Benutzerschnittstelle 51, beispielsweise in Form eines berührungsempfindlichen Displays oder einer anderweitigen Anzeige- und Eingabeeinheit. Über die Steuerungseinrichtung 50 werden sämtliche Funktionen der Heißgetränkeausgabevorrichtung, u.a. die Wasserpumpen 22a, 22b, sämtliche Wegeventile 14a, 14b, 23a, 23b, 27a, 27b, die Aktivierung des Thermoblocks 30 sowie des Reinigungssystems 41, 42, 43 und dessen Dosierpumpe 42 angesteuert. Auch die Temperaturregelung kann durch die Steuerungseinrichtung erfolgen. Hierzu liest die Steuerung den mit dem Thermoblock 30 verbundenen Temperatursensor 35 aus. Über die Steuerungseinrichtung 50 kann somit sowohl im normalen Betrieb die Zubereitung von Kaffeegetränken oder anderen Heißgetränken gesteuert werden, als auch eine Reinigung des Milchsystems und des Thermoblocks 30 durchgeführt werden.

Selbstverständlich liegt es auch im Rahmen der Erfindung, dass die Ventile, die Pumpen und/oder die Heizung des Thermoblocks 30 über getrennte Steuerungskomponenten angesteuert werden, die wiederum untereinander kommunizieren.

## Patentansprüche

1. Vorrichtung zur Ausgabe eines flüssigen Lebensmittelns, insbesondere Milch, mit einer Heizeinrichtung (30) zur Erwärmung des flüssigen Lebensmittels, welche einen Fluidweg (31a, 31b) für das flüssige Lebensmittel und eine elektrische Heizung (34) aufweist, wobei Fluidweg (31a, 31b) und Heizung (34) mit einem Wärmespeicher (33) aus einem Metall hoher thermischer Masse und/oder Leitfähigkeit in thermischem Kontakt stehen und der Wärmespeicher durch die Heizung (34) auf eine Betriebstemperatur gebracht wird, wobei die Betriebstemperatur unterhalb von 80°C, vorzugsweise unterhalb von 70°C liegt, und bei dem der Fluidweg (31a, 31b) über mindestens ein Wegeventil (27a, 27b, 23a, 23b) mit einer Spülleitung verbindbar ist, über die zu Reinigungszwecken Wasser und/oder Reinigungsmittellösung durch den Fluidweg (31a, 31b) geleitet werden kann,
**gekennzeichnet durch**
eine Steuerungseinrichtung (50), die ausgebildet ist, die Heizeinrichtung (30) zur Durchführung einer thermischen Regeneration auf eine Hochtemperatur von über 100°C zu erwärmen und das Wegeventil (27a, 27b, 23a, 23b) ein oder mehrmals zur Durchleitung von Wasser oder Reinigungsmittellösung durch den Fluidweg (31a, 31b) der auf Hochtemperatur erwärmten Heizeinrichtung (30) zu öffnen.

2. Vorrichtung nach einem der vorangehenden Ansprüche, bei der die Steuerung (50) ausgebildet ist, den Fluidweg (31a, 31b) vor Erwärmung der Heizeinrichtung (30) auf Hochtemperatur über das Wegeventil (27a, 27b, 23a, 23b) mit Wasser oder Reinigungsmittellösung zu befüllen.

3. Vorrichtung nach einem der vorangehenden Ansprüche, bei der die Steuerung ausgebildet ist, das Wegeventil (27a, 27b, 23a, 23b) zur stoßweisen Durchleitung von Wasser durch den Fluidweg (31a, 31b) der auf Hochtemperatur erwärmten Heizeinrichtung (30) mehrmals kurzzeitig zu öffnen.

4. Vorrichtung nach einem der vorangehenden Ansprüche, mit einer Pumpe (22a, 22b) zum Fördern des flüssigen Lebensmittelns über eine Lebensmittelzuleitung aus einem Vorratsbehälter (21a, 21b), wobei die Heizeinrichtung (30) zur Erwärmung des von der Pumpe (22a, 22b) geförderten Lebensmittels druckseitig der Pumpe (22a, 22b) angeordnet ist.

5. Vorrichtung nach einem der vorangehenden Ansprüche, bei der die Spülleitung saugseitig der Pumpe (22a, 22b) in die Lebensmittelzuleitung einmündet.

6. Vorrichtung nach einem der vorangehenden Ansprüche, mit einem saugseitig der Pumpe (22a, 22b) in die Lebensmittelzuleitung einmündenden Lufteinlass, wobei die Spülleitung in eine vom Lufteinlass zur Lebensmittelzuleitung führenden Luftansaugleitung (24a, 24b) einmündet.

7. Vorrichtung nach einem der vorangehenden Ansprüche, bei der die Steuerung (50) ausgebildet ist, im Rahmen der thermischen Regeneration bei auf die Hochtemperatur erwärmter Heizeinrichtung (30) kaltes Frischwasser durch den Fluidweg (31a, 31b) zu leiten und davor oder anschließend bei ausgeschaltetem oder auf Betriebstemperatur erwärmter Heizeinrichtung (30) Spülflüssigkeit durch den Fluidweg (31a, 31b) der Heizeinrichtung (30) zu leiten.

8. Verfahren zum Betrieb einer Heizeinrichtung (30), welche zur Erwärmung eines flüssigen Lebensmittels, insbesondere Milch, bei dessen Ausgabe dient, wobei die Heizeinrichtung (30) einen Fluidweg (31a, 31b) für das flüssige Lebensmittel und eine elektrische Heizung (34) aufweist, und Fluidweg (31a, 31b) und Heizung (34) mit einem Wärmespeicher (33) aus einem Metall hoher thermischer Masse und/oder Leitfähigkeit in thermischem Kontakt stehen, wobei der Wärmespeicher (33) durch die Heizung (34) bei der Ausgabe auf eine Betriebstemperatur von unterhalb 80°C, vorzugsweise unterhalb 70°C gebracht wird und wobei zur Reinigung der Fluidweg (31a, 31b) über mindestens ein Wegeventil (27a, 27b, 23a, 23b) mit einer Spülleitung verbunden wird, über die Wasser und/oder Reinigungsmittellösung durch den Fluidweg (31a, 31b) geleitet wird,
**dadurch gekennzeichnet, dass**
die Heizeinrichtung (30) zur Durchführung einer thermischen Regeneration auf eine Hochtemperatur von über 100°C erwärmt und das Wegeventil (27a, 27b, 23a, 23b) ein oder mehrmals geöffnet wird, um Wasser oder Reinigungsmittellösung durch den Fluidweg (31a, 31b) der auf Hochtemperatur erwärmten Heizeinrichtung (30) zu leiten.

## Claims

1. Device for dispensing a liquid food, in particular milk, having a heating apparatus (30) for heating the liquid food, which has a fluid path (31a, 31b) for the liquid food and an electrical heater (34), wherein fluid path (31a, 31b) and heater (34) are in thermal contact with a heat accumulator (33) made of a metal with a high thermal mass and/or conductivity and the heat accumulator is brought up to an operating temperature by means of the heater (34), wherein the operating temperature is below 80°C, preferably below 70°C, and in which the fluid path (31a, 31b) can be connected via at least one directional valve (27a, 27b, 23a, 23b) to a rinsing line, by means of which for cleaning purposes water and/or cleaning agent solution can be guided through the fluid path (31a, 31b),
**characterised by**
a control apparatus (50) which is configured to heat the heating apparatus (30), for carrying out a thermal regeneration, up to a high temperature of over 100°C and to open the directional valve (27a, 27b, 23a, 23b) once or several times for the passage of water or cleaning agent solution through the fluid path (31a, 31b) of the heating apparatus (30) heated to a high temperature.

2. Device according to any of the preceding claims, in which the controller (50) is configured to fill the fluid path (31a, 31b) prior to heating the heating apparatus (30) to a high temperature via the directional valve (27a, 27b, 23a, 23b) with water or cleaning agent solution.

3. Device according to any of the preceding claims, in which the controller is configured to open the directional valve (27a, 27b, 23a, 23b) several times for a brief time period for the intermittent passage of water through the fluid path (31a, 31b) of the heating apparatus (30) which has been heated to high temperature.

4. Device according to any of the preceding claims, having a pump (22a, 22b) for conveying the liquid food via a food supply line from a storage container (21a, 21b), wherein the heating apparatus (30) for heating the food conveyed by the pump (22a, 22b) is arranged on the pressure side of the pump (22a, 22b).

5. Device according to any of the preceding claims, in which the rinsing line opens into the food supply line on the suction side of the pump (22a, 22b).

6. Device according to any of the preceding claims, having an air inlet opening on the suction side of the pump (22a, 22b) into the food supply line, wherein the rinsing line opens into an air suction line (24a, 24b) leading from the air inlet to the food supply line.

7. Device according to any of the preceding claims, in which the controller (50) is configured in the context of the thermal regeneration in the case of the heating apparatus (30) heated to the high temperature to pass cold freshwater through the fluid path (31a, 31b) and prior thereto or subsequently, when the heating apparatus (30) has been switched off or heated to operating temperature, to pass rinsing fluid through the fluid path (31a, 31b) of the heating apparatus (30).

8. Method for operating a heating apparatus (30) which serves for heating a liquid food, in particular milk, when it is dispensed, wherein the heating apparatus (30) has a fluid path (31a, 31b) for the liquid food and an electrical heater (34), and fluid path (31a, 31b) and heater (34) are in thermal contact with a heat accumulator (33) made of a metal of high thermal mass and/or conductivity, wherein the heat accumulator (33) is brought by the heater (34) during the dispensing to an operating temperature of below 80°C, preferably below 70°C, and wherein for cleaning, the fluid path (31a, 31b) is connected via at least one directional valve (27a, 27b, 23a, 23b) to a rinsing line via which water and/or cleaning agent solution are passed through the fluid path (31a, 31b),
**characterised in that**
the heating apparatus (30) is heated to a high temperature of over 100°C for carrying out a thermal regeneration and the directional valve (27a, 27b, 23a, 23b) is opened once or several times in order to pass water or cleaning agent solution through the fluid path (31a, 31b) of the heating apparatus (30) heated to high temperature.

## Revendications

1. Dispositif de distribution d'une denrée alimentaire liquide, en particulier du lait, comprenant un appareil de chauffage (30) pour chauffer la denrée alimentaire liquide, lequel présente un trajet de fluide (31a, 31b) pour la denrée alimentaire liquide et un chauffage électrique (34), dans lequel le trajet de fluide (31a, 31b) et le chauffage (34) sont en contact thermique avec un accumulateur de chaleur (33) composé d'un métal de masse et/ou de conductivité thermique élevée et l'accumulateur de chaleur est amené à une température de service par le chauffage (34), dans lequel la température de service est inférieure à 80 °C, de préférence inférieure à 70 °C, et dans lequel le trajet de fluide (31a, 31b) peut être relié via au moins une soupape à voies (27a, 27b, 23a, 23b) à une conduite de rinçage via laquelle de l'eau et/ou une solution de produit de nettoyage peut être acheminée à travers le trajet de fluide (31a, 31b) à des fins de nettoyage,
**caractérisé par**
un dispositif de commande (50) conçu pour chauffer l'appareil de chauffage (30) à une haute température de plus de 100 °C afin d'effectuer une régénération thermique et pour ouvrir la soupape à voies (27a, 27b, 23a, 23b) une ou plusieurs fois afin d'acheminer de l'eau ou une solution de produit de nettoyage à travers le trajet de fluide (31a, 31b) de l'appareil de chauffage (30) chauffé à haute température.

2. Dispositif selon l'une quelconque des revendications précédentes, dans lequel la commande (50) est conçue pour remplir le trajet de fluide (31a, 31b) d'eau ou de solution de produit de nettoyage via la soupape à voies (27a, 27b, 23a, 23b) avant de chauffer l'appareil de chauffage (30) à haute température.

3. Dispositif selon l'une quelconque des revendications précédentes, dans lequel la commande est conçue pour ouvrir plusieurs fois brièvement la soupape à voies (27a, 27b, 23a, 23b) afin d'acheminer par intermittence de l'eau à travers le trajet de fluide (31a, 31b) de l'appareil de chauffage (30) chauffé à haute température.

4. Dispositif selon l'une quelconque des revendications précédentes, comprenant une pompe (22a, 22b) pour amener la denrée alimentaire liquide via une conduite d'alimentation de denrée alimentaire depuis un réservoir de stockage (21a, 21b), dans lequel l'appareil de chauffage (30) pour chauffer la denrée alimentaire amenée par la pompe (22a, 22b) est disposé côté pression de la pompe (22a, 22b).

5. Dispositif selon l'une quelconque des revendications précédentes, dans lequel la conduite de rinçage débouche dans la conduite d'alimentation de denrée alimentaire côté aspiration de la pompe (22a, 22b).

6. Dispositif selon l'une quelconque des revendications précédentes, comprenant une entrée d'air débouchant dans la conduite d'alimentation de denrée alimentaire côté aspiration de la pompe (22a, 22b), dans lequel la conduite de rinçage débouche dans une conduite d'aspiration d'air (24a, 24b) menant de l'entrée d'air à la conduite d'alimentation de denrée alimentaire.

7. Dispositif selon l'une quelconque des revendications précédentes, dans lequel la commande (50) est conçue pour acheminer de l'eau fraîche froide à travers le trajet de fluide (31a, 31b) dans le cadre de la régénération thermique lorsque l'appareil de chauffage (30) est chauffé à la haute température et pour acheminer du liquide de rinçage à travers le trajet de fluide (31a, 31b) de l'appareil de chauffage (30) avant ou après lorsque l'appareil de chauffage (30) est éteint ou chauffé à la température de service.

8. Procédé de fonctionnement d'un appareil de chauffage (30) servant à chauffer une denrée alimentaire liquide, en particulier du lait, lors de sa distribution, dans lequel l'appareil de chauffage (30) présente un trajet de fluide (31a, 31b) pour la denrée alimentaire liquide et un chauffage électrique (34), et le trajet de fluide (31a, 31b) et le chauffage (34) sont en contact thermique avec un accumulateur de chaleur (33) composé d'un métal de masse et/ou de conductivité thermique élevée, dans lequel l'accumulateur de chaleur (33) est amené par le chauffage (34), lors de la distribution, à une température de service inférieure à 80 °C, de préférence inférieure à 70 °C, et dans lequel, pour le nettoyage, le trajet de fluide (31a, 31b) est relié via au moins une soupape à voies (27a, 27b, 23a, 23b) à une conduite de rinçage via laquelle de l'eau et/ou une solution de produit de nettoyage peut être acheminée à travers le trajet de fluide (31a, 31b),
**caractérisé en ce que**
l'appareil de chauffage (30) est chauffé à une haute température de plus de 100 °C afin d'effectuer une régénération thermique et la soupape à voies (27a, 27b, 23a, 23b) est ouverte une ou plusieurs fois afin d'acheminer de l'eau ou une solution de produit de nettoyage à travers le trajet de fluide (31a, 31b) de l'appareil de chauffage (30) chauffé à haute température.
